# EUROPEAN PATENT SPECIFICATION

(11) **EP 3 731 421 B1**
(45) Date of publication and mention of the grant of the patent: **18.05.2022**
(21) Application number: 18892507.7
(22) Date of filing: 21.09.2018
(51) Int. Cl.: H04B 1/18, H04B 1/401

(54) **COMMUNICATION SYSTEM AND WIRELESS SENSOR SYSTEM**
KOMMUNIKATIONSSYSTEM UND DRAHTLOSES SENSORSYSTEM
SYSTÈME DE COMMUNICATION, ET SYSTÈME DE CAPTEUR SANS FIL

(30) Priority: 19.12.2017 JP 2017242957
(43) Date of publication of application: 28.10.2020
(73) Proprietor: Alps Alpine Co., Ltd., Ota-ku Tokyo 145-8501 (JP)
(72) Inventor: MATSUSHITA, Shuhei, Tokyo 145-8501 (JP)
(74) Representative: Maiwald Patent- und Rechtsanwaltsgesellschaft mbH
(86) International application number: PCT/JP2018/035125
(87) International publication number: WO 2019/123748

(56) References cited:
- EP-A1- 2 154 751
- WO-A1-2015/105117
- WO-A1-2017/164228
- GB-A- 2 442 032
- JP-A- 2016 177 715
- US-A1- 2009 160 603
- US-A1- 2017 127 196

## Description

### TECHNICAL FIELD

The present invention relates to a communication system and a wireless sensor system.

### BACKGROUND ART

Conventionally, there has been a wireless communication system that includes a first communication device and a second communication device, each of which includes an antenna, an antenna matching circuit, a level detection unit to detect a signal level received by the antenna, a test signal transmission unit to transmit a test signal via the antenna, and a unit to reply to the counterpart device with information on the reception level of the received test signal.

With this wireless communication system, a technique has been known in which the antenna matching circuit is set in a state where a physical-level link has been established between the first communication device and the second communication device, as follows.

The second communication device transmits a test signal; and the first communication device receives the test signal, adjusts the antenna matching circuit so as to maximize the reception level, and stores the adjusted value as an optimum value upon reception. The first communication device transmits a test signal; and the second communication device receives the test signal, and returns the reception level to the first communication device. The procedure described above is performed multiple times while changing the setting of the antenna matching circuit, to determine an adjusted value of the maximum efficiency, and to store the determined adjusted value as the optimum value when transmitting signals (see, e.g., Patent Document 1). An example of a modular active antenna for receving multiple broadcasting signals is disclosed in Patent Document 2.

### RELATED ART DOCUMENTS

### PATENT DOCUMENTS

Patent Document 1: Japanese Laid-Open Patent Application No. 2011-082592
Patent Document 2: European Laid-Open Patent Application No. 2 154 751 A1

### DISCLOSURE OF THE INVENTION

### PROBLEM TO BE SOLVED BY THE INVENTION

However, in such a conventional wireless communication system, the adjustment is not easy because the antenna matching circuit is matched after the physical-level link has been established between the first communication device and the second communication device. More specifically, there are problems such that the number of devices that can be linked is limited due to wireless specifications and resource problems, and that a step of adjusting the impedance of the antennas among multiple devices is time-consuming.

Thereupon, it is an object to provide a communication system and a wireless sensor system in which the impedance of the antennas can be easily adjusted.

### MEANS OF SOLVING THE PROBLEM

The invention is defined in the claims.

### EFFECTS OF THE INVENTION

It is possible to provide a communication system and a wireless sensor system in which the impedance of the antennas can be easily adjusted.

### BRIEF DESCRIPTION OF THE DRAWINGS

FIG. 1 is a diagram illustrating a configuration of a communication system 100 of an embodiment;
FIG. 2 is a diagram illustrating an example of a configuration of a communication terminal 110;
FIG. 3 is a diagram illustrating a packet structure of an adjustment start command, an incompletion notice, and a completion notice;
FIG. 4 is a diagram illustrating an example of a configuration of a communication terminal 120;
FIG. 5 includes diagrams tabulating weights depending on the reception level of an adjustment start command, and evaluation results of the reception strengths of adjustment start commands on the channels 37, 38, and 39;
FIG. 6 is a diagram illustrating a flow chart that shows a process performed by a control unit 125A of a communication terminal 120;
FIG. 7 is a diagram illustrating a flow chart that shows a process performed by a control unit 115A of a communication terminal 110; and
FIG. 8 is a diagram illustrating a wireless sensor system 200.

### MODE OF CARRYING OUT THE INVENTION

In the following, embodiments will be described in which a communication system and a wireless sensor system according to the present invention are applied.

### <Embodiments>

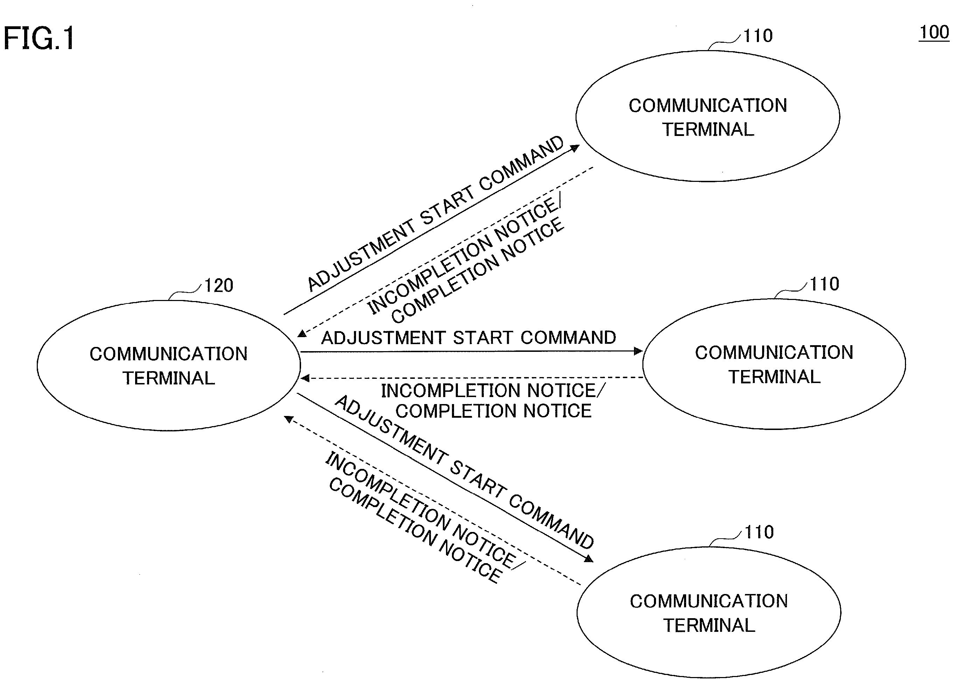

FIG. 1 is a diagram illustrating a configuration of a communication system 100 of an embodiment.

The communication system 100 includes communication terminals 110 and a communication terminal 120. Multiple communication terminals 110 are provided for one communication terminal 120. Although FIG. 1 illustrates three communication terminals 110, the number of communication terminals 110 provided for one communication terminal 120 is not limited in particular as long as being greater than or equal to one; for example, around 100 terminals may be provided.

Also, multiple sets of multiple communication terminals 110 and a single communication terminal 120 as illustrated in FIG. 1 may be provided. The configuration and operations of multiple communication terminals 110 and a communication terminal 120 in each set are the same; therefore, in the following, a single set of multiple communication terminals 110 and a communication terminal 120 will be described.

The communication terminals 110 and the communication terminal 120 perform data communication using, for example, the broadcast communication of BLE (Bluetooth (registered trademark) Low Energy). The communication terminals 110 and the communication terminal 120 communicate, for example, at a frequency in the 2.45 GHz band. Frequencies in the 2.45 GHz band constitute a predetermined frequency band around 2.45 GHz specified as the ISM (Industrial, Scientific, and Medical) radio bands. Here, for example, a method will be described in which the communication terminals 110 and the communication terminal 120 find each other to establish communication using channels 37, 38, and 39.

Note that as for the channels 37, 38, and 39, the frequency of the channel 37 is the lowest; the frequency of the channel 38 is intermediate among those of the channels 37, 38, and 39; and the frequency of the channel 39 is the highest.

In response to receiving an adjustment start command transmitted from the communication terminal 120 using the broadcast communication, each communication terminal 110 starts adjusting the impedance of the antenna. If a communication terminal 110 is adjusting the impedance of the antenna, the communication terminal 110 transmits an incompletion notice indicating that the adjustment is incomplete to the communication terminal 120. Also, once having completed the adjustment of the impedance of the antenna, the communication terminal 110 transmits a completion notice indicating completion of the adjustment to the communication terminal 120. The communication terminal 120 periodically transmits adjustment start commands until signals received from the respective communication terminals 110 become all completion notices. Adjustment start commands, incompletion notices, and completion notices are communicated as packet data.

In this way, the communication terminals 110 and the communication terminal 120 communicate packet data bidirectionally using the broadcast communication until the adjustment of the impedance of the antenna is completed for every communication terminal 110. Therefore, each of the communication terminals 110 and the communication terminal 120 can serve as both a broadcaster and an observer in the broadcast communication. In other words, the communication terminals 110 and the communication terminal 120 are multirole communication terminals.

In the case where the communication terminal 120 transmits an adjustment start command to the communication terminal 110, the communication terminal 120 serves as the broadcaster and the communication terminal 110 serves as the observer. In this case, the communication terminal 120 transmits the adjustment start command as an advertise signal, and the communication terminal 120 receives the adjustment start command by performing a scanning operation.

Conversely, in the case where the communication terminal 110 transmits an incompletion notice or a completion notice to the communication terminal 120, the communication terminal 110 serves as the broadcaster and the communication terminal 120 serves as the observer. In this case, the communication terminal 110 transmits the incompletion notice or completion notice as an advertise signal, and the communication terminal 120 receives the advertise signal by scanning.

In this way, each communication terminal 110 adjusts the impedance of the antenna so as to finally have the impedance of the antenna best matched with the channel 38 among the channels 37, 38, and 39. The frequency of the channel 38 is a desired value to which the impedance of the antenna is finally set on the communication terminal 110, which is an example of a desired frequency. In the following, the impedance of the antennas is adjusted so that the antennas of the communication terminals 110 resonate with each other.

Also, here, assume that the impedance of the antenna of the communication terminal 120 has been adjusted in advance to an optimum impedance when performing the broadcast communication with the communication terminals 110.

Note that after having completed the adjustment of the impedance of the antenna of every communication terminal 110, the multiple communication terminals 110 and the communication terminal 120 construct a network to perform data communication using packet data. In this case, every communication terminal 110 may have a form to perform data communication via the communication terminal 120; or by changing the role of some of the communication terminals 110, may perform communication via those communication terminals 110 whose roles have been changed.

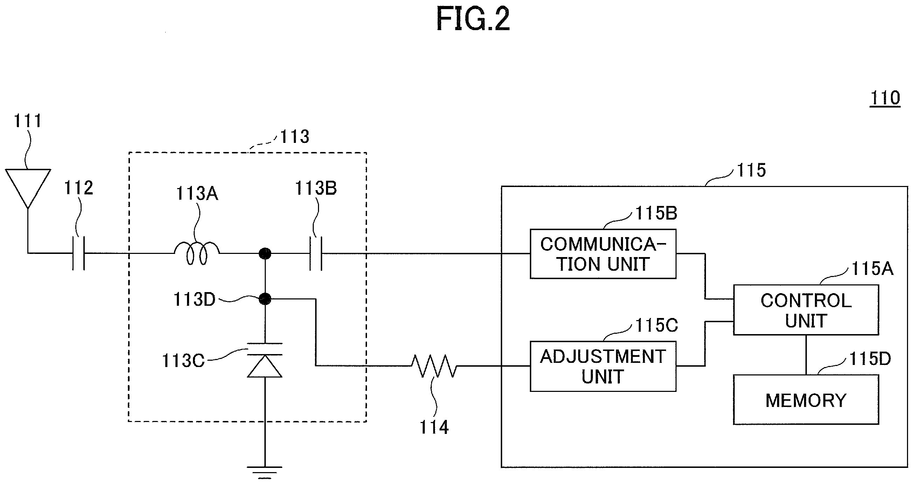

FIG. 2 is a diagram illustrating an example of a configuration of a communication terminal 110. The multiple communication terminals 110 have configurations equivalent to each other.

The communication terminal 110 includes an antenna 111, a capacitor 112, a matching circuit 113, a resistor 114, and an MCU (Micro Computer Unit) 115.

The antenna 111 is an antenna for the broadcast communication, and is an antenna to communicate at a frequency in the 2.45 GHz band. The antenna 111 is connected to the MCU 115 via the capacitor 112 and the matching circuit 113.

The capacitor 112 is inserted in series between the antenna 111 and the matching circuit 113. The capacitor 112 is a capacitor for DC (Direct Current) coupling.

The matching circuit 113 is provided between the capacitor 112 and the MCU 115, and includes a coil 113A, a capacitor 113B, and a varactor diode 113C. The matching circuit 113 is a CLC-type matching circuit in which the coil 113A, the capacitor 113B, and the varactor diode 113C are arranged in a T-shape.

The coil 113A and the capacitor 113B are inserted in series between the capacitor 112 and the MCU 115. The varactor diode 113C has a cathode connected to a connecting point between the capacitor 112 and MCU 115, and has an anode grounded. The varactor diode 113C is an example of a variable element.

The resistor 114 has one end connected to a connection point 113D between a connection point in the middle of the capacitor 112 and the MCU 115, and the cathode of the varactor diode 113C, and has the other end connected to the MCU 115. The resistor 114 is a resistor inserted in series in a line through which the MCU 115 adjusts the potential of the connection point 113D.

The MCU 115 includes a control unit 115A, a communication unit 115B, an adjustment unit 115C, and a memory 115D.

The control unit 115A measures the reception level of an adjustment start command received via the antenna 111 when adjusting the impedance of the antenna 111. The control unit 115A stores data representing a measured reception level in the memory 115D.

The control unit 115A receives, for multiple times, an adjustment start commands for each of the channels 37, 38, and 39, and evaluates the reception strength on each of the channels 37, 38, and 39. When evaluating the reception strength, weights are given depending on a mean value of the multiple reception strengths.

Then, based on results of the evaluation, the control unit 115A causes the adjustment unit 115C to adjust the electrostatic capacitance of the varactor diode 113C, so as to have a maximum reception strength on the channel 38 among the channels 37, 38, and 39.

The communication unit 115B is a part that serves as an interface when the communication terminal 110 performs communication. The communication unit 115B is connected to the antenna 111 through the matching circuit 113 on the outside of the communication terminal 110, and is connected to the control unit 115A on the inside of the communication terminal 110.

The adjustment unit 115C is connected to the connection point 113D through the resistor 114 on the outside of the communication terminal 110, and is connected to the control unit 115A on the inside of the communication terminal 110. The adjustment unit 115C adjusts the potential of the connection point 113D, based on a command to adjust the electrostatic capacitance of the varactor diode 113C transmitted from the control unit 115A. This causes the potential of the cathode of the varactor diode 113C to change, and thereby, the electrostatic capacitance of the varactor diode 113C is adjusted.

The memory 115D stores programs, data, and the like necessary to perform a process of measuring the reception level of an adjustment start command, and a process of evaluating the reception strengths of adjustment start commands on the channels 37, 38, and 39 when the control unit 115A adjusts the impedance of the antenna 111. Also, the memory 115D stores data representing reception levels measured by the control unit 115A.

Also, the memory 115D further stores programs, data, and the like necessary to perform a process of causing the adjustment unit 115C to adjust the electrostatic capacitance of the varactor diode 113C based on evaluation results, and a process of performing data communication with the communication terminal 120 in a state where the adjustment of the impedance of the antenna 111 has been completed for every communication terminal 110.

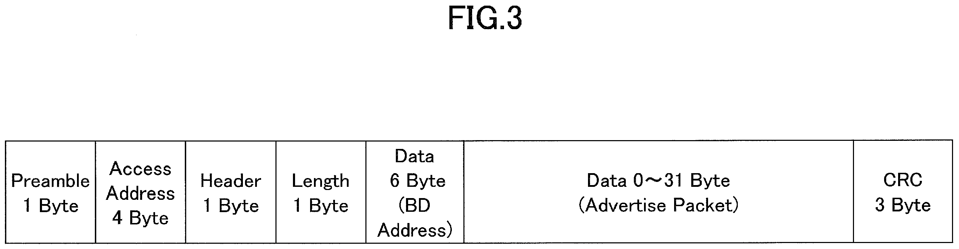

FIG. 3 is a diagram illustrating a packet structure of an adjustment start command, an incompletion notice, and a completion notice. FIG. 3 illustrates, for example, the data structure of a packet for an advertise signal in BLE.

The packet data of BLE has fields of preamble, access address, header, length, data (BD address), data (advertise packet), and CRC.

The respective data lengths are 1 byte for the preamble, 4 bytes for the access address, 1 byte for the header, 1 byte for the length, 6 bytes for the data (BD address), 0 to 31 bytes for the data (advertise packet), and 3 bytes for the CRC.

By including specific data up to 31 bytes in the field of data (advertise packet), it is possible to distinguish an adjustment start command, an incompletion notice, and a completion notice from each other. Also, for an incompletion notice and a completion notice, a specific ID (Identifier) may be assigned to each of the multiple communication terminals 110 to be included in the field of data (advertise packet) of up to 31 bytes. This enables to distinguish an incompletion notice and a completion notice transmitted by any one of the multiple communication terminals 110.

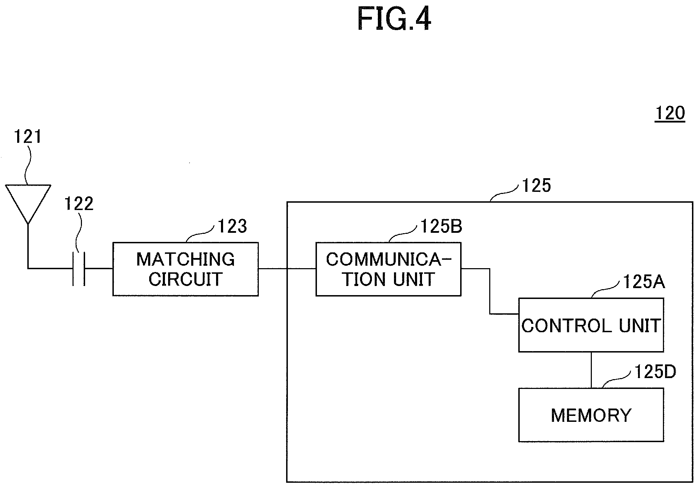

FIG. 4 is a diagram illustrating an example of a configuration of the communication terminal 120.

The communication terminal 120 includes an antenna 121, a capacitor 122, a matching circuit 123, and an MCU 125. The communication terminal 120 may be connected to an upper level device such as a tablet computer or a personal computer via a network.

Like the antenna 111 of the communication terminal 110, the antenna 121 is an antenna for the broadcast communication, and is an antenna to communicate at a frequency in the 2.45 GHz band. The antenna 121 is connected to the MCU 115 via the capacitor 122 and the matching circuit 123.

The capacitor 122 is inserted in series between the antenna 121 and the matching circuit 123. The capacitor 122 is a capacitor for DC coupling.

The matching circuit 123 is provided between the capacitor 122 and the MCU 125, and is a circuit that matches the impedance between the antenna 121/capacitor 122 and the MCU 125.

The MCU 125 includes a control unit 125A, a communication unit 125B, and a memory 125D.

The control unit 125A periodically (e.g., every second) performs time-division multiplexed transmission fo adjustment start commands of the channels 37, 38, and 39 while performing a process of adjusting the impedance of the antennas 111 of the communication terminals 110.

The control unit 125A receives an incompletion notice or completion notice from each communication terminal 110 via the antenna 121, and repeatedly perform time-division multiplexed transmission of adjustment start commands of the channels 37, 38, and 39, until completion notices are received from all of the communication terminals 110.

The communication unit 125B is a part that serves as an interface when the communication terminal 120 performs communication. The communication unit 125B is connected to the antenna 121 through the matching circuit 123 on the outside of the communication terminal 120, and is connected to the control unit 125A on the inside of the communication terminal 120.

The memory 125D stores programs, data, and the like necessary for the control unit 125A to perform a process of time-division multiplexed transmission of adjustment start commands of the channels 37, 38, and 39; and a process of data communication with the communication terminals 110 in a state where the impedance adjustment of the antenna 111 has been completed for every communication terminal 110.

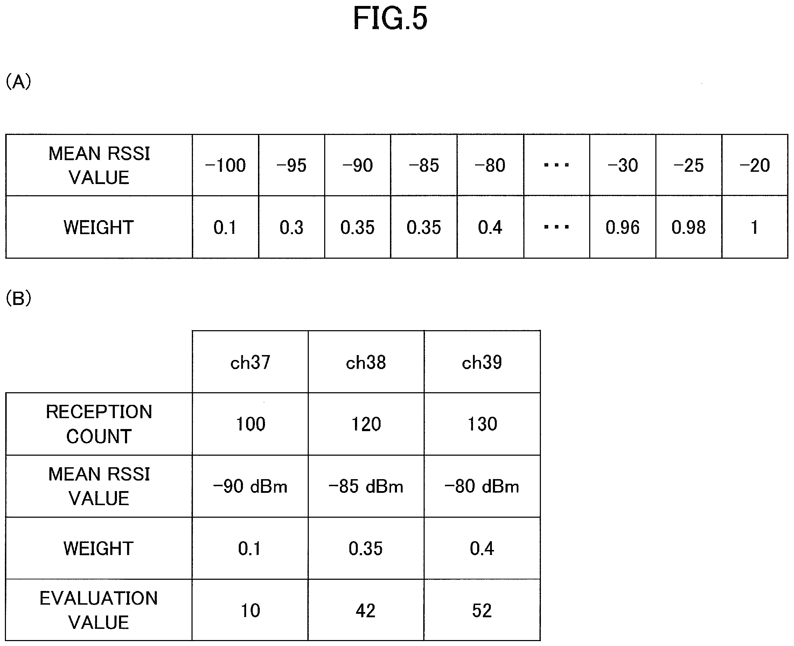

FIG. 5 includes diagrams tabulating weights depending on the reception level of an adjustment start command, and evaluation results of the reception strengths of adjustment start commands on the channels 37, 38, and 39.

Although the method of evaluating the reception state of the device 110 is not specified in particular, for example, the value of RSSI (Received Signal Strength Indicator) is used as a value indicating the reception strength of an adjustment start command. FIG. 5 includes diagrams tabulating weights depending on the reception level of an adjustment start command, and evaluation results of the reception strengths of adjustment start commands on the channels 37, 38, and 39. The communication terminal 110 repeatedly receives adjustment start commands of the channels 37, 38, and 39 for multiple times, and obtains a mean value of RSSI values of the multiple adjustment start commands for each channel. For example, in the case where the communication terminal 120 repeatedly transmits adjustment start commands of the channels 37, 38, and 39 for 130 times during a discretionarily specified time t2, the control unit 115A of the communication terminal 110 calculates the mean value of the reception strength for actual receptions of the commands among the 130 times of transmissions.

FIG. 5(A) tabulates weights depending on mean values of the reception strength. The mean RSSI values are divided into intervals of 5 dBm from -100 dBm to -20 dBm, to set the weights. The weights are set such that in the case of the mean RSSI value being -100 dBm, the weight is set to 0.1, the weight is gradually increased toward -20 dBm, and the weight is set to 1 at -20 dBm. In a channel having a greater mean RSSI value, the impedance of the antenna is matched better; therefore, for a greater mean RSSI value, a greater weight is set.

FIG. 5(B) tabulates the reception count (the number of times of receptions) of adjustment start commands, the mean RSSI value, the weight, and the evaluation value for the channels (ch) 37, 38, and 39.

Assume that the reception counts of the channels 37, 38, and 39 are 100, 120, and 130, respectively. Here, the communication terminal 120 repeatedly transmits the adjustment start commands of the channels 37, 38, and 39 for 130 times during a predetermined time (supposed to be t2); therefore, the table shows that the adjustment start commands of the channel 37 are received by the communication terminal 110 for 100 times out of 130 times of transmissions.

Similarly, the table shows that the adjustment start commands of the channel 38 are received by the communication terminal 110 for 120 times out of the 130 times, and the adjustment start commands of the channel 39 are received by the communication terminal 110 for 130 times out of the 130 times.

In these cases, for example, assume that the mean RSSI values for the channel 37, 38, and 39 of the adjustment start commands are -90 dBm,-85 dBm, and -80 dBm, respectively. Therefore, corresponding weights of the channels 37, 38, and 39 are 0.1, 0.35, and 0.4, respectively.

In the embodiment, the evaluation values of the channels 37, 38, and 39 are obtained, and based on the evaluation values, a determination is made whether the adjustment of the impedance of the antenna 111 has been completed. The evaluation value is calculated for each channel, by multiplying the reception count by the weight. Note that such processing is performed by the control unit 115A.

The evaluation values for the channels 37, 38, and 39 are calculated to be 10, 42, and 52, respectively. In such an example, the reception strength of the adjustment start command is the highest on the channel 39, and the reception strength of the adjustment start command is the lowest on the channel 37.

In the embodiment, the impedance of the antenna 111 is adjusted so as to have a best match with the channel 38; therefore, the control unit 115A causes the adjustment unit 115C to adjust the electrostatic capacitance of the varactor diode 113C, so as to obtain a maximum reception strength of the adjustment start command on the channel 38.

In other words, a highest estimation value on the channel 38 means completion of the adjustment of the impedance of the antenna 111.

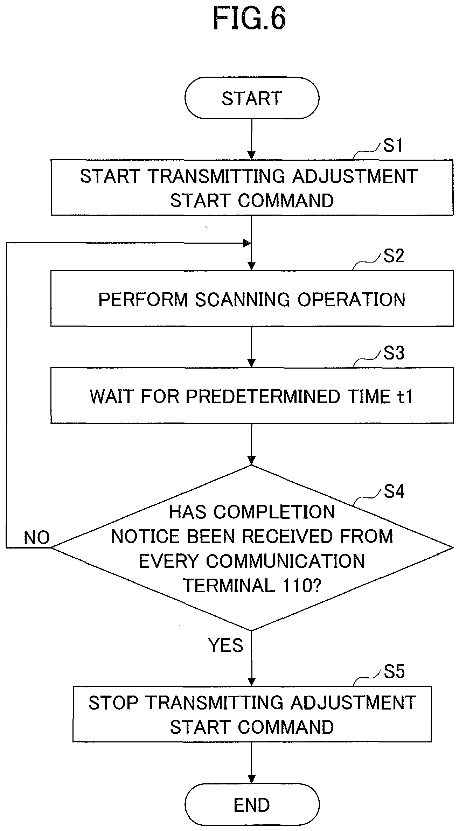

FIG. 6 is a diagram illustrating a flow chart that shows a process performed by the control unit 125A of the communication terminal 120. The flow illustrated in FIG. 6 will be described, for example, assuming that the flow is periodically (e.g., once in 24 hours) executed by the control unit 125A.

The control unit 125A starts transmitting adjustment start commands at Step S1. The transmission process of adjustment start commands is a process of transmitting advertise signals performed by the communication terminal 120.

Once having performed Step S1, the control unit 125A proceeds to an operation of repeating the transmission of adjustment start commands on the channels 37, 38, and 39.

The control unit 125A performs a scanning operation at Step S2. The control unit 125A performs the scanning operation to receive a completion notice or incompletion notice from each communication terminal 110.

The control unit 125A waits until a predetermined time t1 elapses after having started the scanning operation, at Step S3. In other words, the control unit 125A performs the scanning operation for the predetermined time t1. The predetermined time t1 is, for example, 600 seconds.

After having waited for 10 seconds at Step S3, the control unit 125A determines whether a completion notice has been received from every communication terminals 110 at Step S4. Such a determination process is performed because it is necessary to transmit adjustment start commands until the adjustment of the impedance of the antenna 111 is completed for every communication terminal 110.

If the control unit 125A has determined that a completion notice has not been received from every communication terminal 110 (NO at Step S4), the flow returns to Step S2 to perform the scanning operation again and to receive a completion notice or incompletion notice from each communication terminal 110.

If the control unit 125A has determined that a completion notice has been received from every communication terminal 110 (YES at Step S4), the transmission process of adjustment start commands ends at Step S5. Step S5 stops transmitting adjustment start commands.

Having completed the processing at Step S5, the control unit 125A ends the series of steps (END).

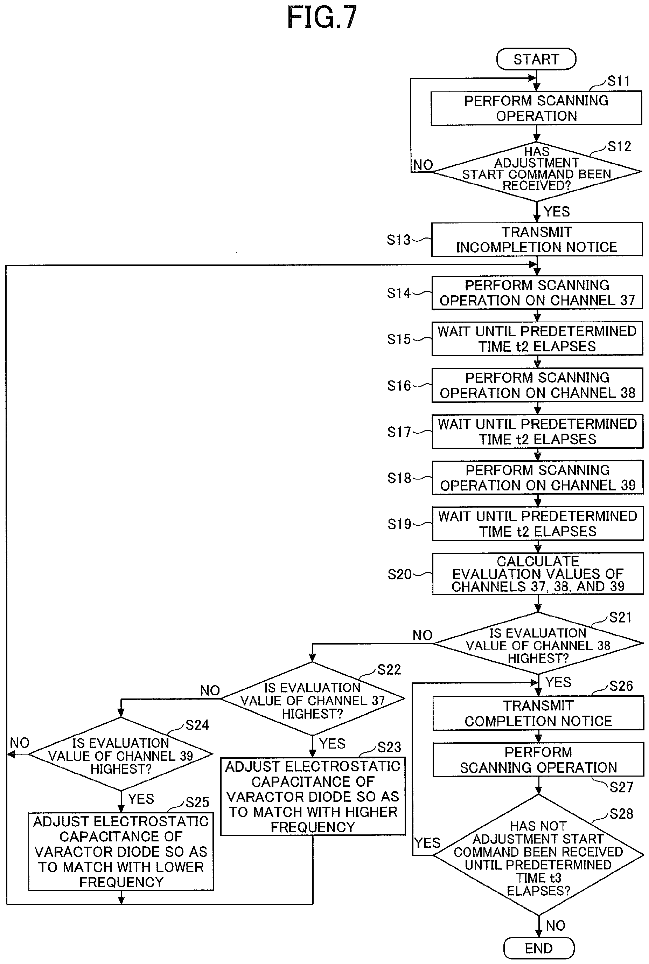

FIG. 7 is a diagram illustrating a flow chart that shows a process performed by the control unit 115A of the communication terminal 110. The flow illustrated in FIG. 7 will be described, for example, assuming that the flow is periodically (e.g., once in 24 hours) executed by the control unit 115A.

The control unit 115A performs scanning operations on the channels 37, 38, and 39 at Step S11. The control unit 115A simultaneously performs the scanning operations on the channels 37, 38, and 39, to receive adjustment start commands from the communication terminal 120. The communication terminal 120 transmits three adjustment start commands for the channels 37, 38, and 39.

At the stage of executing Step S11, which channel has the best impedance of the antenna 111 is yet to be known; therefore, the scanning operations are performed on the three channels.

The control unit 115A determines whether adjustment start commands have been received at Step S12.

If having determined that adjustment start commands have been received (YES at Step S12), the control unit 115A starts transmitting incompletion notices of the channels 37, 38, and 39 at Step S13. The control unit 115A transmits incompletion notices of the channels 37, 38, and 39 at fixed intervals (e.g., every 10 seconds). The transmission process of the incompletion notices is a process of transmitting advertise signals performed by the communication terminal 110.

Note that the control unit 115A does not count the adjustment start commands received at Step S12 in the reception count for evaluation. The control unit 115A increments the reception count in a loop processing at Steps S13 to S25, which will be described later.

The control unit 115A performs a scanning operation on the channel 37 at Step S14 to receive a adjustment start command of the channel 37.

After having started the scanning operation on the channel 37 at Step S14, the control unit 115A waits until a predetermined time t2 elapses at Step S15. In other words, the control unit 115A performs the scanning operation for the predetermined time t2. The predetermined time t2 is, for example, one minute. If having received the adjustment start command of the channel 37, the control unit 115A increments the reception count.

The control unit 115A performs a scanning operation on the channel 38 at Step S16 to receive a adjustment start command of the channel 38.

After having started the scanning operation at Step S16, the control unit 115A waits until a predetermined time t2 elapses at Step S17. In other words, the control unit 115A performs the scanning operation for the predetermined time t2. The predetermined time t2 is, for example, one minute. If having received the adjustment start command of the channel 38, the control unit 115A increments the reception count.

The control unit 115A performs a scanning operation on the channel 39 at Step S18 to receive a adjustment start command of the channel 39.

After having started the scanning operation at Step S18, the control unit 115A waits until a predetermined time t2 elapses at Step S19. In other words, the control unit 115A performs the scanning operation for the predetermined time t2. The predetermined time t2 is, for example, one minute. If having received the adjustment start command of the channel 39, the control unit 115A increments the reception count.

The control unit 115A calculates evaluation values of the channels 37, 38, and 39 at Step S20. The evaluation value is calculated for each of the channels 37, 38, and 39, by multiplying the reception count of adjustment start commands by the weight.

The control unit 115A determines whether the evaluation value of the channel 38 is the highest at Step S21. This step is performed to determine at the outset whether the impedance of the antenna 111 is adjusted to match with the channel 38 as the final desired channel of the adjustment. Note that the evaluation value of the channel 38 being the highest is equivalent to the evaluation value of the channel 38 showing a predetermined strength higher than the evaluation values of the channels 37 and 39.

If having determined at Step S21 that the evaluation value of the channel 38 is not the highest (NO at Step S21), the control unit 115A determines whether the evaluation value of the channel 37 is the highest at Step S22.

If having determined at Step S22 that the evaluation value of the channel 37 is the highest (YES at Step S22), the control unit 115A causes the adjustment unit 115C to adjust the electrostatic capacitance of the varactor diode 113C so as to match the impedance of the antenna 111 with a higher frequency at Step S23.

This is because, the frequency of the channel 37 is lower than the frequency of the channel 38; therefore, in the case of the evaluation value of the channel 37 being the highest, the impedance of the antenna 111 is shifted to the lower frequency side than the channel 38 with which the impedance is desired to match finally.

If having determined at Step S22 that the evaluation value of the channel 37 is not the highest (NO at Step S22), the control unit 115A determines whether the evaluation value of the channel 39 is the highest at Step S24.

If having determined at Step S24 that the evaluation value of the channel 39 is the highest (YES at Step S24), the control unit 115A causes the adjustment unit 115C to adjust the electrostatic capacitance of the varactor diode 113C so as to match the impedance of the antenna 111 with a lower frequency at Step S25.

This is because, the frequency of the channel 39 is higher than the frequency of the channel 38; therefore, in the case of the evaluation value of the channel 39 being the highest, the impedance of the antenna 111 is shifted to the higher frequency side than the channel 38 with which the impedance is desired to match finally.

Upon completion of the processing at Step S23 or S25, the control unit 115A returns the flow to Step S14 to continue transmitting an incompletion notice, so as to evaluate the reception strength again.

Also, if having determined at Step S24 that the evaluation value of the channel 39 is not the highest (NO at Step S24), the control unit 115A returns the flow to Step S13 for the same reason, to restart the processing, for example, in the case where the same evaluation value is obtained for the channel 37 and 38, or for the channel 38 and 39.

If having determined at Step S21 that the evaluation value of the channel 38 is the highest (YES at Step S21), the control unit 115A stops transmitting incompletion notices and transmits a completion notice, at Step S26. The transmission process of a completion notice is a process of transmitting an advertise signal performed by the communication terminal 110.

The control unit 115A performs scanning operations on the channels 37, 38, and 39 at Step S27. This is because, if the communication terminal 120 has received the completion notice from every communication terminal 110, no more adjustment start command will be transmitted; in order to confirm that, the communication terminal 120 performs the scanning operations.

The control unit 115A determines whether or not an adjustment start command has been received within a period from the start of the scanning operations until a predetermined time t3 elapses at Step S28.

If having determined at Step S28 that an adjustment start command has been received (YES at Step S28), the flow returns to Step S26 to transmit a completion notice.

If having determined at Step S28 that no adjustment start command has been received (NO at Step S28), the control unit 115A ends the series of steps.

The impedance of the antenna 111 of every communication terminal 110 is adjusted to match with the channel 38, by the communication terminal 120 repeatedly transmitting adjustment start commands using the broadcast communication according to the processing in FIG. 6, and by the communication terminal 110 transmitting incompletion notices using the broadcast communication while adjusting the electrostatic capacitance of the varactor diode 113C according to the processing in FIG. 7.

In this way, the processing for matching the impedance of the antenna 111 of every communication terminal 110 with the channel 38 can be performed using the broadcast communication, which enables to easily perform matching for the impedance of the antenna 111 of every communication terminal 110.

For example, the processing does not need to establish a physical-level link as has been done conventionally, and can be implemented by simple communication using broadcasting (advertising).

Therefore, according to the embodiment, it is possible to provide a communication system 100 in which the impedance of the antennas 111 of communication terminals 110 can be easily adjusted.

Also, the embodiment uses the broadcast communication of BLE; therefore, there is no limit on the number of communication terminals 110 as long as located within a reachable range of adjustment start commands, incompletion notices, and completion notices using the broadcast communication.

Therefore, even in the case of a large number of communication terminals 110, it is possible to easily adjust the impedance of the antenna 111 of each communication terminal 110.

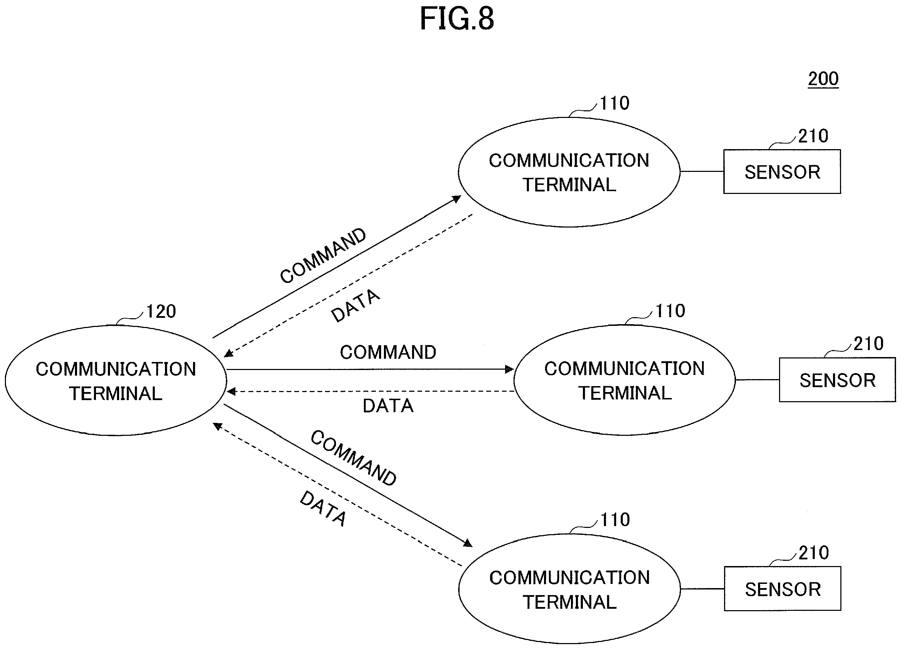

Also, the communication terminal 110 may have sensors connected to detect various items of data such as voltage, current, temperature, humidity, and the like. By having such sensors connected to each communication terminal 110, a wireless sensor system 200 as illustrated in FIG. 8 can be constructed.

FIG. 8 is a diagram illustrating a wireless sensor system 200. The wireless sensor system 200 includes multiple communication terminals 110, one communication terminal 120, and sensors 210 connected to the communication terminals 110.

After having adjusted the impedance of the antenna 111 of each communication terminal 110, when a command is transmitted from the communication terminal 120 to the communication terminals 110, the control units 115A of the communication terminals 110 transmit various items of data such as a voltage, a current, a temperature, a humidity, and the like detected by the sensors 210 to the communication terminal 120. In this way, a huge amount of data can be collected on the communication terminal 120. Note that the aggregation of data may be performed by a particular communication terminal 110.

Therefore, according to the embodiments, in addition to a communication system 100 in which the impedance of antennas 111 can be easily adjusted, it is possible to provide a wireless sensor system 200 in which the impedance of antennas can be easily adjusted.

Note that although forms have been described in which the impedance of the antenna 121 of the communication terminal 120 has been adjusted in advance, there may be a communication terminal that adjusts the impedance of the antenna 121 of the communication terminal 120 in substantially the same way as described above. In this case, after having the impedance of the antenna 121 adjusted, the communication terminal 120 may adjust the impedance of the antennas 111 of the communication terminals 110 by the method described above.

Also, as above, forms have been described in which by using adjustment start commands of three channels 37, 38, and 39, the impedance is adjusted to maximize the reception strength of an adjustment start command on the channel 38.

However, instead of using adjustment start commands of three channels 37, 38, and 39, it is possible to use two channels 37 and 38, two channels 38 and 39, or one channel 38.

In the case of using two channels 37 and 38, after having the evaluation value of the adjustment start command of the channel 37 transition to a state being higher than the evaluation value of the adjustment start command of the channel 38, at a timing when the impedance is adjusted such that the evaluation value of the adjustment start command of the channel 38 is higher than the evaluation value of the adjustment start command of the channel 37, the adjustment of the impedance may be completed. In the case of using adjustment start commands of the two channels 38 and 39, the high-low relationship between the two channels is inverted.

In the case of using an adjustment start command of one channel 38, the evaluation value may be obtained while adjusting the impedance, and when the evaluation value becomes the highest, the adjustment of the impedance may be completed.

Also, as above, forms have been described in which evaluation values obtained by multiplying weights by reception counts for the respective channels are used for determining whether the impedance of the channel 38 is best matched. However, it is possible to evaluate the matching by the mean RSSI values without weighting, or by other methods.

As above, a communication system and a wireless sensor system have been described with exemplary embodiments according to the present invention; note that the present invention is not limited to the specifically disclosed embodiments, and various variations and alterations can be made without deviating from the claims.

### DESCRIPTION OF REFERENCE NUMERALS

100 communication system
110 communication terminal
120 communication terminal
111, 121 antenna
113C varactor diode
115A control unit
115C adjustment unit
200 wireless sensor system
210 sensor

## Claims

1. A communication system (100) comprising:
a plurality of first communication terminals (110) each including a first antenna (111), and a variable element (113C) configured to adjust impedance of the first antenna (111); and
a second communication terminal (120) including a second antenna (121), and configured to transmit an adjustment start command to cause each of the plurality of first communication terminals (110) to start adjusting the impedance of the variable element (113C), from the second antenna (121) using broadcast communication,
wherein said each of the plurality of first communication terminals (110) is configured to adjust the impedance of the variable element (113C), in response to receiving the adjustment start command using the broadcast communication, so as to increase a reception strength of the adjustment start command.

2. The communication system (100) as claimed in claim 1, wherein the second communication terminal (120)is configured to perform time-division multiplexed transmission of a plurality of adjustment start commands including an adjustment start command of a desired frequency and an adjustment start command of a frequency different from the desired frequency, as the adjustment start command, to the plurality of first communication terminals (110), and
wherein said each of the plurality of first communication terminals (110) is configured to adjust the impedance of the variable element (113C) so as to increase the reception strength of the adjustment start command of the desired frequency.

3. The communication system (100) as claimed in claim 2, wherein the second communication terminal (120) is configured to perform time-division multiplexed transmission of three adjustment start commands including the adjustment start command of the desired frequency, an adjustment start command of a frequency lower than the desired frequency, and an adjustment start command of a frequency higher than the desired frequency, as the plurality of adjustment start commands, to the plurality of first communication terminals (110), and
wherein said each of the plurality of first communication terminals (110) is configured to adjust the impedance of the variable element (113C) so as to maximize the reception strength of the adjustment start command of the desired frequency among the three adjustment start commands.

4. The communication system (100) as claimed in claim 2 or 3, wherein the second communication terminal (120) is configured to repeatedly transmit each of the plurality of adjustment start commands to the plurality of first communication terminals (110), and
wherein said each of the first communication terminal (110) is configured to give a weight to the reception strength based on a reception count of said each of the plurality of adjustment start commands, and to adjust the impedance of the variable element (113C) so as to increase the reception strength to which the weight is given.

5. The communication system (100) as claimed in any one of claims 2 to 4, wherein said each of the first communication terminal (110) is configured to transmit a completion notice indicating completion of adjustment of the impedance of the variable element (113C) to the second communication terminal (120) using the broadcasting communication, in response to the reception strength of the adjustment start command of the desired frequency becoming greater than or equal to a predetermined strength.

6. A wireless sensor system (200) comprising:
the communication system (100) as claimed in any one of claims 1 to 5, and
a plurality of sensors (210) connected to the plurality of first communication terminals (110), respectively.

## Patentansprüche

1. Kommunikationssystem (100), umfassend:
eine Mehrzahl an ersten Kommunikationsterminals (110), wovon jeder eine erste Antenne (111) und ein variables Element (113C), das dazu eingerichtet ist, eine Impedanz der ersten Antenne (111) anzupassen, beinhaltet; und
einen zweiten Kommunikationsterminal (120), der eine zweite Antenne (121) beinhaltet und dazu eingerichtet ist, einen Anpassungsstartbefehl von der zweiten Antenne (121) mittels Broadcast-Kommunikation zu übertragen, um jeden der Mehrzahl an ersten Kommunikationsterminals (110) dazu zu veranlassen, die Impedanz des variablen Elements (113C) anzupassen,
wobei jeder der besagten Mehrzahl an ersten Kommunikationsterminals (110) dazu eingerichtet ist, die Impedanz des variablen Elements (113C) als Reaktion auf das Empfangen des Anpassungsstartbefehls mittels Broadcast-Kommunikation anzupassen, um eine Empfangsstärke des Anpassungsstartbefehls zu erhöhen.

2. Kommunikationssystem (100) nach Anspruch 1, wobei der zweite Kommunikationsterminal (120) dazu eingerichtet ist, eine zeitmultiplexierte Übertragung einer Mehrzahl an Anpassungsstartbefehlen, die einen Anpassungsstartbefehl in einer gewünschten Frequenz und einen Anpassungsstartbefehl in einer von der gewünschten Frequenz verschiedenen Frequenz beinhaltet, als den Anpassungsstartbefehl an die Mehrzahl an ersten Kommunikationsterminals (110) durchzuführen, und
wobei jeder der besagten Mehrzahl an ersten Kommunikationsterminals (110) dazu eingerichtet ist, die Impedanz des variablen Elements (113C) anzupassen, um die Empfangsstärke des Anpassungsstartbefehls in der gewünschten Frequenz zu erhöhen.

3. Kommunikationssystem (100) nach Anspruch 2, wobei der zweite Kommunikationsterminal (120) dazu eingerichtet ist, eine zeitmultiplexierte Übertragung von drei Anpassungsstartbefehlen, die den Anpassungsstartbefehl in der gewünschten Frequenz, einen Anpassungsstartbefehl in einer Frequenz niedriger als die gewünschte Frequenz und einen Anpassungsstartbefehl in einer Frequenz höher als die gewünschte Frequenz beinhalten, als die Mehrzahl an Anpassungsstartbefehlen zu der Mehrzahl an ersten Kommunikationsterminals (110) durchzuführen, und
wobei jeder der besagten Mehrzahl an ersten Kommunikationsterminals (110) dazu eingerichtet ist, die Impedanz des variablen Elements (113C) anzupassen, um die Empfangsstärke des Anpassungsstartbefehls in der gewünschten Frequenz unter den drei Anpassungsstartbefehlen zu maximieren.

4. Kommunikationssystem (100) nach Anspruch 2 oder 3, wobei der zweite Kommunikationsterminal (120) dazu eingerichtet ist, jeden der Mehrzahl an Anpassungsstartbefehlen wiederholt an die Mehrzahl an ersten Kommunikationsterminals (110) zu übertragen, und
wobei jeder der besagten ersten Kommunikationsterminals (110) dazu eingerichtet ist, der Empfangsstärke basierend auf einer Empfangszahl von jedem der besagten Mehrzahl an Anpassungsstartbefehlen eine Gewichtung zu geben, und die Impedanz des variablen Elements (113C) anzupassen, um die Empfangsstärke, welcher die Gewichtung gegeben wurde, zu erhöhen.

5. Kommunikationssystem (100) nach einem der Ansprüche 2 bis 4, wobei jeder der besagten ersten Kommunikationsterminals (110) dazu eingerichtet ist, eine Fertigstellungsmeldung, die die Fertigstellung der Anpassung der Impedanz des variablen Elements (113C) anzeigt, an den zweiten Kommunikationsterminals (120) mittels Broadcast-Kommunikation zu übertragen, als Reaktion darauf, dass die Empfangsstärke des Anpassungsstartbefehls in der gewünschten Frequenz größer als oder gleich zu der vorbestimmten Stärke wird.

6. Drahtloses Sensorsystem (200), umfassend:
das Kommunikationssystem (100) nach einem der Ansprüche 1 bis 4, und
eine Mehrzahl an Sensoren (210), die entsprechend mit der Vielzahl an ersten Kommunikationsterminals (110) verbunden sind.

## Revendications

1. Système de communication (100), comprenant :
une pluralité de premiers terminaux de communication (110) incluant chacun une première antenne (111) et un élément variable (113C) configuré pour régler l'impédance de la première antenne (111) ; et
un deuxième terminal de communication (120) incluant une deuxième antenne (121) et configuré pour transmettre une commande de début de réglage pour amener chacun de la pluralité de premiers terminaux de communication (110) à commencer à régler l'impédance de l'élément variable (113C), depuis la deuxième antenne (121) en utilisant une communication par diffusion,
dans lequel chacun de la pluralité de premiers terminaux de communication (110) est configuré pour régler l'impédance de l'élément variable (113C), en réponse à la réception de la commande de début de réglage en utilisant la communication par diffusion, de façon à augmenter une puissance de réception de la commande de début de réglage.

2. Système de communication (100) selon la revendication 1, dans lequel le deuxième terminal de communication (120) est configuré pour effectuer une transmission multiplexée par répartition dans le temps d'une pluralité de commandes de début de réglage incluant une commande de début de réglage d'une fréquence souhaitée et une commande de début de réglage d'une fréquence différente de la fréquence souhaitée, en tant que commande de début de réglage, à la pluralité de premiers terminaux de communication (110), et dans lequel chacun de la pluralité de premiers terminaux de communication (110) est configuré pour régler l'impédance de l'élément variable (113C) de façon à augmenter la puissance de réception de la commande de début de réglage de la fréquence souhaitée.

3. Système de communication (100) selon la revendication 2, dans lequel le deuxième terminal de communication (120) est configuré pour effectuer une transmission multiplexée par répartition dans le temps de trois commandes de début de réglage incluant la commande de début de réglage de la fréquence souhaitée, une commande de début de réglage d'une fréquence inférieure à la fréquence souhaitée et une commande de début de réglage d'une fréquence supérieure à la fréquence souhaitée, en tant que pluralité de commandes de début de réglage, à la pluralité de premiers terminaux de communication (110), et
dans lequel chacun de la pluralité de premiers terminaux de communication (110) est configuré pour régler l'impédance de l'élément variable (113C) de façon à maximiser la puissance de réception de la commande de début de réglage de la fréquence souhaitée parmi les trois commandes de début de réglage.

4. Système de communication (100) selon la revendication 2 ou 3, dans lequel le deuxième terminal de communication (120) est configuré pour transmettre de manière répétée chacune de la pluralité de commandes de début de réglage à la pluralité de premiers terminaux de communication (110), et dans lequel chacun des premiers terminaux de communication (110) est configuré pour donner un poids à la puissance de réception sur la base d'un nombre de réceptions de chacune de la pluralité de commandes de début de réglage, et pour régler l'impédance de l'élément variable (113C) de façon à augmenter la puissance de réception à laquelle le poids est donné.

5. Système de communication (100) selon l'une quelconque des revendications 2 à 4, dans lequel chacun des premiers terminaux de communication (110) est configuré pour transmettre une notification d'achèvement, indiquant l'achèvement du réglage de l'impédance de l'élément variable (113C), au deuxième terminal de communication (120) en utilisant la communication par diffusion, en réponse au fait que la puissance de réception de la commande de début de réglage de la fréquence souhaitée devient supérieure ou égale à une puissance prédéterminée.

6. Système de capteurs sans fil (200) comprenant :
le système de communication (100) selon l'une quelconque des revendications 1 à 5, et
une pluralité de capteurs (210) connectés respectivement à la pluralité de premiers terminaux de communication (110).
